(19) **Europäisches Patentamt European Patent Office Office européen des brevets**

(11) **EP 2 373 529 B1**

(12) **FASCICULE DE BREVET EUROPEEN**

(45) Date de publication et mention de la délivrance du brevet:
**17.10.2012 Bulletin 2012/42**

(21) Numéro de dépôt: **09802176.9**

(22) Date de dépôt: **15.12.2009**

(51) Int Cl.:
**B60W 40/10** (2012.01)  **B62D 6/00** (2006.01)

(86) Numéro de dépôt international:
**PCT/FR2009/052537**

(87) Numéro de publication internationale:
**WO 2010/070229 (24.06.2010 Gazette 2010/25)**

(54) **PROCÉDÉ DE DÉTERMINATION DU TAUX DE SOUS-VIRAGE D'UN VÉHICULE ÉQUIPÉ D'UNE DIRECTION ASSISTÉE ÉLECTRIQUE, ET DE CORRECTION ÉVENTUELLE DE L'ASSISTANCE DE DIRECTION**

VERFAHREN ZUR BESTIMMUNG DES UNTERSTEUERUNGSGRADS EINES FAHRZEUGS MIT SERVOLENKUNG UND ZUR OPTIMALEN KORREKTUR DER SERVOLENKUNG

METHOD FOR DETERMINING THE UNDERSTEERING RATIO OF A VEHICLE PROVIDED WITH ELECTRIC POWER STEERING AND FOR OPTIONALLY CORRECTING THE POWER STEERING

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **19.12.2008 FR 0858842**

(43) Date de publication de la demande:
**12.10.2011 Bulletin 2011/41**

(73) Titulaire: **JTEKT Europe**
**69540 Irigny (FR)**

(72) Inventeurs:
• **BARTHOMEUF, Julien**
**F-69230 Saint Genis Laval (FR)**
• **MICHELIS, André**
**F-69540 Grigny (FR)**

(74) Mandataire: **Chevalier, Renaud Philippe et al**
**Cabinet Germain & Maureau**
**BP 6153**
**69466 Lyon Cedex 06 (FR)**

(56) Documents cités:
EP-A- 0 296 756    EP-A- 1 481 872
EP-A- 1 607 306    EP-A- 2 065 291
FR-A- 2 861 045    US-A1- 2005 189 161
US-B2- 7 424 352

## Description

La présente invention concerne, de façon générale, les véhicules automobiles équipés d'une direction assistée électrique (DAE) et d'un système antiblocage de roues communément appelé système ABS. L'invention concerne plus particulièrement un procédé de détermination de taux de sous-virage pour ces véhicules et de correction éventuelle de l'assistance de direction.

Un procédé selon le préambule de la revendication 1 est divulgué par US 7424352 B2.

Selon les conditions climatiques, l'état de la route ou les aléas rencontrés, la conduite d'une automobile peut se révéler compliquée. Certaines situations d'urgence nécessitent une bonne maîtrise du volant.

En particulier, durant la négociation d'un virage, si le conducteur accélère il se produit un transfert de masse de l'avant vers l'arrière du véhicule. Ce transfert de masse a pour conséquence de délester les roues avant du poids du véhicule ce qui peut entrainer le décrochage de celles-ci. Le véhicule effectue alors ce qu'on appelle un sous-virage.

De même, si un conducteur arrive trop vite à l'entrée d'un virage et décélère brutalement pour réduire sa vitesse (en relâchant l'accélérateur, par un rétrogradage trop fort ou encore en s'aidant de la pédale de frein), il se produit un transfert de masse de l'arrière vers l'avant du véhicule. Ce transfert de masse a pour conséquence de délester les roues arrière du poids du véhicule ce qui peut entraîner la perte d'adhérence au sol de celles-ci. Un faible braquage des roues vers l'intérieur du virage suffit alors à entrainer le véhicule dans un mouvement de rotation où la partie arrière du véhicule va passer devant la partie avant. C'est ce qu'on appelle un survirage ou plus communément un « tête à queue ».

Evidemment ces réactions du véhicule peuvent être contrées par des manoeuvres de pilotage qui demandent l'acquisition de réflexes et une certaine dextérité, ce que n'a évidemment pas la majorité des gens qui ont même tendance à freiner plus fort lorsque le véhicule entame un survirage. Ces réactions peuvent également être accentuées ou diminuées suivant divers paramètres propres au véhicule comme tout d'abord l'adhérence de ses pneus, ou encore ses suspensions qui si elles sont trop molles entraînent un accroissement du transfert de masse ainsi que du roulis qui entraîne le véhicule vers l'extérieur du virage.

Pour aider les conducteurs dans ces situations d'urgence, certains véhicules sont équipés d'un système de contrôle dynamique de trajectoire dit ESP (en anglais Electronic Stability Program).

L'ESP est un système de sécurité active qui nécessite, en plus d'un calculateur spécifique, des capteurs supplémentaires (capteur de position absolue du volant, capteur d'accélération latérale et de vitesse de lacet) d'une part, et des actionneurs sur le système de freinage d'autre part. L'ESP peut aussi envoyer une consigne à la direction assistée électrique pour modifier le couple d'assistance. Tout ceci explique son prix élevé et la raison pour laquelle il est seulement proposé sur les véhicules haut de gamme ou en option onéreuse. De plus, son installation peut s'avérer complexe et doit prendre en compte beaucoup de paramètres propres à chaque modèle de véhicule.

La présente invention vise à permettre à la direction assistée électrique de détecter au plus tôt un écart entre la consigne d'angle au volant du conducteur et la réponse du véhicule sans utiliser, contrairement à l'ESP, ni capteur, ni actionneur supplémentaire autres que ceux de la direction assistée électrique elle-même et que les informations disponibles de l'ABS.

A cet effet, la présente invention a pour objet un procédé de détermination d'un taux de sous-virage pour véhicules automobiles équipés d'un système de direction assistée électrique comprenant un moteur électrique d'assistance piloté par un calculateur électronique embarqué, d'un capteur donnant une première information sur une position angulaire réelle du volant, d'un système antiblocage de roues (ABS) fournissant une seconde information sur la vitesse des roues du véhicule, caractérisé en ce que le calculateur embarqué du système de direction électrique traite cette seconde information pour estimer une position angulaire instantanée théorique du volant qu'il compare ensuite à la position angulaire réelle du volant pour en déduire le taux de sous-virage du véhicule.

Ce procédé permet donc de déterminer le taux de sous-virage du véhicule en rapportant la valeur de la position réelle absolue du volant déterminée par un capteur à un instant donné sur une valeur estimée à ce même instant de la position angulaire théorique du volant du véhicule déduite des mesures de vitesse différentielle entre les roues de rayon de courbure différents effectuées par le système ABS. On obtient donc un rapport :

$$\tau = \frac{\theta_{volant\ réel}}{\theta_{volant\ estimé}}$$

La valeur de ce rapport permet tout d'abord de savoir si le véhicule se trouve en sous-virage, en survirage ou en condition de conduite normale. Typiquement, si la valeur du taux est supérieure à $1+\varepsilon$, où $\varepsilon$ est l'incertitude de mesure à déterminer par simulation ou par essais et caractéristique de chaque véhicule, le véhicule se trouve en condition de sous-virage. Si la valeur du taux est inférieure à $1-\varepsilon$, le véhicule se trouve en conditions de survirage. Si la valeur du taux est dans l'intervalle $1-\varepsilon < \tau < 1+\varepsilon$, le véhicule se trouve dans des conditions de conduite normales.

La comparaison entre ces deux valeurs peut également être faite en calculant leur différence plutôt que leur rapport ; il est ainsi possible de déduire directement du signe de la différence si le véhicule se trouve en sous-virage ou en survirage.

Un tel procédé est relativement peu coûteux à mettre en oeuvre en comparaison à un système ESP car il ne fait pas appel à des capteurs, actionneurs et calculateurs supplémentaires mais utilise uniquement ceux qui sont déjà installés dans des véhicules de série équipés au minimum d'un système de direction assistée électrique et d'un système ABS, ce qui est le cas de la plupart des véhicules récents.

Dans un mode de réalisation, la première information est donnée par un capteur d'angle dédié.

Ce capteur est généralement disposé directement sur la colonne de direction. L'information fournie par ce capteur absolu multitour ou non est disponible dès l'initialisation de l'électronique de la direction assistée électrique, au démarrage du véhicule.

Avantageusement, la première information est donnée par l'intermédiaire d'un capteur relatif non dédié associé au moteur électrique d'assistance.

Cette disposition permet de s'affranchir de l'utilisation d'un capteur d'angle avec zéro absolu qui est onéreux et qui nécessite un nombre important d'entrées pour le traitement de son signal. La position angulaire du volant est déterminée non plus par un capteur dédié mais par une estimation faite à partir des informations relatives à la position du rotor du moteur électrique d'assistance et fournies par un capteur associé au moteur électrique d'assistance.

Dans un mode de réalisation, le taux de sous-virage calculé est utilisé par un système de modification de couple ressenti au volant.

Cette disposition permet d'informer le conducteur d'une perte d'adhérence imminente ou d'un écart de trajectoire et de l'inciter au plus tôt, en fonction du taux de sous-virage, à reprendre la bonne trajectoire en modifiant le couple ressenti au volant. Le système de modification de couple ressenti au volant est idéalement intégré au système de direction assistée électrique, en particulier à son calculateur et à son moteur électrique qui agira dynamiquement sur le couple ressenti au volant.

Dans le cadre de ce même mode de réalisation, la modification de couple ressenti au volant est proportionnelle au taux de sous-virage calculé.

Cette disposition est un bon compromis entre le taux de sous-virage et le couple résistant ressenti au volant par le conducteur. Néanmoins, la présente invention n'est nullement limitée à une fonction proportionnelle entre le taux de sous-virage et le couple résistant ressenti au volant.

Selon un mode de réalisation, le système de modification de couple ressenti au volant est déconnectable.

Le conducteur reste ainsi libre d'imposer un angle au volant et de conserver une trajectoire désirée, ce qui permet une conduite sportive en dérapage pour autant que le conducteur puisse également déconnecter l'ESP du véhicule s'il en est pourvu.

Selon un autre mode de réalisation, la modification du couple ressenti au volant est adaptée au type de virage effectué typiquement à droite ou à gauche.

Cette disposition permet d'appliquer un couple ressenti plus élevé d'un côté que de l'autre. Il est ainsi possible par exemple dans un pays où l'on conduit sur la voie de droite, de restreindre plus rapidement et fortement la rotation du volant à droite pour prévenir un sous-virage qui déporterait le véhicule sur la voie gauche de circulation et pourrait occasionner une collision frontale avec un véhicule venant en sens inverse ce qui est beaucoup plus dangereux qu'un sous-virage qui déporterait le véhicule en bordure de route dans le sens de la marche.

Selon encore un autre mode de réalisation, la modification du couple ressenti au volant est adaptée au type d'écart de trajectoire, typiquement sous-virage ou survirage.

L'origine du sous-virage ou survirage ne sont pas les mêmes et « le coup de volant » pour faire face à l'une ou l'autre de ces situations n'est pas le même. Pour contrer le sous-virage dans le cas général d'un véhicule à traction, il faut redonner de l'adhérence aux roues avant du véhicule en relâchant l'accélérateur et /ou en freinant légèrement tout en ramenant le volant au plus près de sa position de référence pour éviter un survirage. Ensuite, après avoir repris de l'adhérence, il suffit de ramener le volant selon la trajectoire du virage. Pour contrer le survirage, toujours dans le cas général d'un véhicule à traction, il faut redonner de l'adhérence aux roues arrière, avant que celles-ci passent devant les roues avant ce qui entraînerait un « tête à queue ». Pour cela, il n'est pas forcément nécessaire de décélérer mais il faut par contre contrebraquer dans le sens inverse de celui du virage à effectuer pour que le transfert des masses de l'arrière vers l'avant du véhicule n'embarque pas le véhicule dans un mouvement de rotation autour de ses roues avant. Durant un contre-braquage, il est très important de ne pas freiner car cela intensifierait le survirage. Dans les deux cas, il faut donc empêcher le conducteur de tourner le volant davantage selon le tracé du virage. Dans le cas du sous-virage, il faudra l'inciter à ramener le volant dans sa position de référence, et dans le cas du survirage, il faudra l'inciter à contrebraquer en durcissant le couple à chaque fois entre la position où se trouve le volant et la position optimale pour parer à l'une ou l'autre de ces situations.

Avantageusement, le système de modification du couple ressenti au volant agit en diminuant le couple d'assistance du moteur électrique ou bien dans un autre mode de réalisation, le système de modification du couple ressenti au volant agit en augmentant le couple d'assistance du moteur électrique.

Ces deux configurations sont possibles et le procédé peut donc s'adapter à l'une ou l'autre de ces configurations suivant le système de direction assistée d'origine du véhicule.

De toute façon, l'invention sera bien comprise à l'aide de la description qui suit, en référence aux dessins schématiques annexés représentant, à titre d'exemples, une forme de mise en oeuvre du procédé selon l'invention.

La figure 1 est une vue en perspective, schématisée, d'une direction assistée électrique de l'état de la technique.
La figure 2 est une vue en perspective, schématisée, illustrant la mise en oeuvre du procédé selon l'invention dans un véhicule.
La figure 3 est un schéma de principe illustrant les étapes de réalisation du procédé.

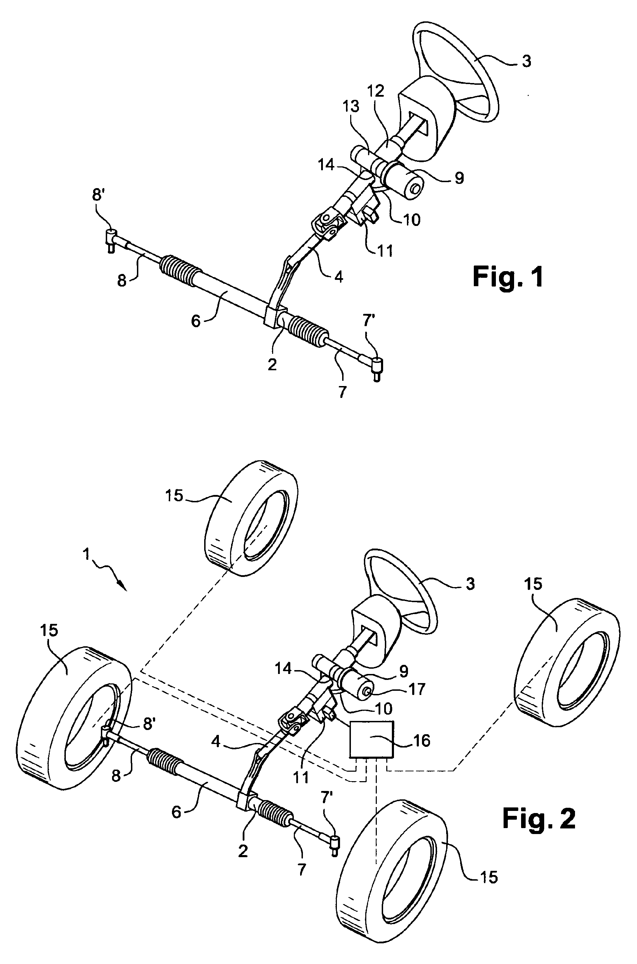

La figure 1 rappelle quels sont les principaux éléments composant un système de direction assistée électrique de véhicule automobile.

Une telle direction comprend, d'une part, une partie mécanique désignée globalement par le repère 2, comprenant un volant de conduite 3 lié à une colonne de direction 4, dont l'extrémité éloignée du volant 3 porte un pignon de direction en prise avec une crémaillère 5, montée coulissante dans un carter de direction 6. Les deux extrémités opposées de la crémaillère 5 sont respectivement liées, par l'intermédiaire de biellettes 7 et 8 équipées chacune sur leur extrémité extérieure d'une rotule de direction 7' et 8', aux porte-moyeux (non représentés) des roues directrices droite et gauche du véhicule automobile concerné.

La direction comprend, pour assister l'effort manuel exercé par le conducteur du véhicule sur le volant 3, un moteur électrique d'assistance 9 à deux sens de rotation, dont l'arbre de sortie est accouplé, par l'intermédiaire d'un réducteur de vitesse 10 notamment à vis sans fin et roue tangente, à la colonne de direction 4, de manière à transmettre un couple moteur (éventuellement aussi un couple résistant) à la colonne de direction 4.

Le moteur électrique d'assistance 9 est piloté par un calculateur électronique embarqué 11, qui reçoit et traite divers signaux, en provenance de capteurs. Dans une réalisation classique, le calculateur électronique 11 reçoit éventuellement un signal électrique issu d'un capteur 12 de l'angle du volant 3, représentatif de l'angle instantané réel de braquage du véhicule automobile concerné, et ce calculateur 11 reçoit aussi un signal d'un capteur de couple 13 placé sur la colonne de direction 4, et mesurant ainsi le couple exercé par le conducteur sur le volant 3.

Dans l'exemple illustré, il est encore prévu un résolveur 14 pour détecter la position angulaire absolue $\theta$ du moteur électrique d'assistance 9 entre deux pôles successifs parmi les n pôles statoriques de ce moteur d'assistance 9, avec

$$0 < \theta < \frac{360}{n}$$

A partir de ces diverses informations, le calculateur 11 pilote le moteur électrique d'assistance 9, en définissant à tout moment un couple ou un effort d'assistance, pouvant amplifier ou au contraire compenser l'effort appliqué par le conducteur sur le volant 3, selon des « lois d'assistance » prédéfinies programmés dans une mémoire non volatile du calculateur 11.

La mise en oeuvre du procédé dans un véhicule automobile selon l'invention représenté à la figure 2, utilise en plus du système de direction assistée électrique représenté à la figure 1, le système d'antiblocage des roues ABS qui informe en permanence le calculateur 11 sur la vitesse de chacune des roues 15 par l'intermédiaire d'un autre calculateur 16 dédié. Dans l'exemple présenté, le procédé s'affranchit du capteur de position 12 de l'angle du volant 3, en le remplaçant par une estimation réalisée dans le calculateur électronique embarqué 11 à partir des informations relatives à la position du rotor du moteur électrique d'assistance 9 et fournies par le résolveur 14 associé au moteur électrique d'assistance 9.

Le calculateur 11 traite ces diverses informations et en déduit une valeur de taux de sous-virage $\tau$ en fonction de laquelle il pilote le système de modification de couple ressenti 17 assimilé au moteur électrique d'assistance 9 dans l'exemple présenté.

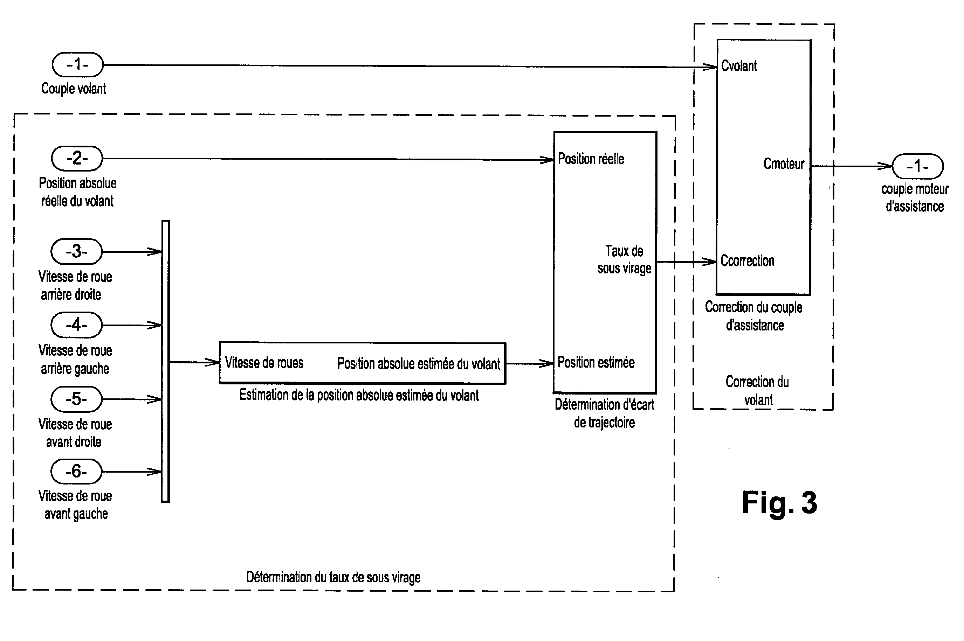

Sur la figure 3, l'algorithme reprenant les étapes de fonctionnement du procédé selon l'invention est décomposé au minimum en deux sous ensembles formant deux blocs A et B. Un troisième sous ensemble C peut être ajouté.

Le bloc A réalise l'estimation d'une position absolue réelle du volant soit en recalant le résolveur 14 avec le capteur d'angle 12 intégré à la colonne de direction 4 soit, avantageusement car elle ne nécessite pas l'utilisation d'un capteur d'angle 12, par une stratégie exploitant des informations relatives à la position du rotor du moteur électrique d'assistance 9 et fournies par le résolveur 14 associé à ce moteur électrique d'assistance 9.

En parallèle, il est estimé une position théorique du volant 3 en fonction de l'analyse de la vitesse des roues 15 du véhicule.

En effet, il est possible d'estimer une position absolue instantanée du volant 3 par calcul, en analysant les vitesses de chacune des roues 15 du véhicule, quel que soit le type de transmission : traction, propulsion, ou quatre roues motrices.

En prenant comme exemple les deux roues arrière, la vitesse moyenne des roues arrière s'obtient par la formule suivante :

$$V_{moyenne\ roues\ arrière} = \frac{V_{roue\ gauche\ arrière} + V_{roue\ droite\ arrière}}{2}$$

L'écart de vitesse des roues arrière s'écrit :

$$E_{vitesses\ arrière} = V_{roue\ gauche\ arrière} - V_{roue\ droite\ arrière}$$

Le signe instantané de la direction est donné par le signe de l'écart de vitesse des roues arrière, et par convention, le signe est positif lorsque le volant est braqué à droite et le signe est négatif lorsque le volant est braqué à gauche.

Connaissant la voie arrière V du véhicule, le rayon instantané R de la trajectoire du véhicule est calculé à partir de la formule suivante :

$$R = \frac{V_{moyenne\ roues\ arrière}}{E_{vitesses\ arrière}} \times Voie_{arrière}$$

Le rayon R étant déterminé, et connaissant l'empattement L du véhicule, l'angle d'Ackerman correspondant à l'angle moyen de braquage des roues directrices, est calculé à partir de la formule suivante :

$$\alpha_{Ackerman} = \frac{L}{R}$$

L'accélération latérale $\gamma_{latérale}$ du véhicule, estimée à partir du rayon instantané et de la vitesse moyenne du véhicule, permet de calculer l'angle moyen $\alpha$ de dérive des pneumatiques :

$$\gamma_{latérale} = \frac{(V_{moyenne\ roues\ arrière})^2}{R}$$

$$\alpha_{dérive\ théorique} = K(R) \times \gamma_{latérale}$$

La relation entre le gradient K de sous-virage, et le rayon de braquage R, est propre à chaque modèle de véhicule. Cette relation est renseignée sous forme de table stockée en mémoire non volatile dans le calculateur 11.

L'angle de dérive théorique est corrigé par un gain correcteur G fonction de l'accélération latérale caractéristique au véhicule :

$$\alpha_{dérive} = G(\gamma_{latérale}) \times \alpha_{dérive\ théorique}$$

L'angle moyen de braquage des roues directrices, est égal à la somme de l'angle d'Ackerman, et de l'angle moyen de dérive des pneumatiques :

$$\alpha_{roues\ directrices} = \alpha_{Ackerman} + \alpha_{dérive}$$

Il existe une relation entre la position angulaire absolue du volant, et l'angle de braquage des roues directrices, caractéristique de chaque modèle de véhicule. Cette relation est renseignée sous forme de table stockée en mémoire non volatile dans le calculateur.

$$\theta_{absolu\ volant} = f(\alpha_{roues\ directrices})\ \text{donc,}$$

$$\theta_{volant\ estimé} = f(\alpha_{roues\ directrices})$$

Le bloc B réalise le calcul du taux de sous-virage. L'information des vitesses de roues 15 est mise à disposition périodiquement par le calculateur d'ABS 16 au calculateur 11 de la direction assistée électrique sur le réseau multiplexé CAN (Controller Area Network) du véhicule. Le calculateur d'ABS 16 calcule les vitesses de roues 15 par traitement des signaux issus des capteurs de chaque roue 15.

Lorsque les conditions de roulage sont réunies (glissement et dérive limités), la position théorique estimée instantanée est sensiblement égale à la position absolue réelle du volant 3, c'est dans ces conditions que le résolveur 14 associé à la direction assistée électrique est recalé et devient l'équivalent d'un capteur d'angle absolu 12 multitour, monotour ou relatif intégré à la direction assistée électrique.

Lorsque la perte d'adhérence au sol d'un des deux trains du véhicule (avant ou arrière) devient important, il apparaît un écart entre la position du volant 3, soit mesurée par un capteur d'angle 12, soit calculée à partir de la position du moteur 9 de la direction assistée électrique, et la position théorique estimée instantanée.

Cet écart permet de déterminer le taux de sous-virage pour savoir si le véhicule est en sous-virage ou en survirage.

Ce taux de sous-virage n'est autre que le rapport de l'angle volant absolu réel et de l'angle volant estimé instantané.

$$\tau = \frac{\theta_{volant\ réel}}{\theta_{volant\ estimé}}$$

Le bloc C corrige le couple d'assistance. A partir du taux de sous-virage, il est possible de corriger le couple d'assistance en fonction des conditions dynamiques de roulage sans avoir de consigne extérieure, venant de l'ESP par exemple.

Une zone neutre prédéfinie peut déterminer la tolérance d'écart autorisé, avant déclenchement d'un couple de correction. Au-delà de cette zone neutre, un couple de correction peut être calculé, proportionnellement à l'écart de la trajectoire.

Dans ce cas, un limiteur de couple permet de maintenir le couple de correction dans une plage acceptable. Notamment, le couple de correction doit être ressenti mais il ne doit pas empêcher de manoeuvre à gauche, comme à droite, quelles que soient les circonstances.

Lorsque le couple de correction est nul, le couple du moteur électrique d'assistance s'applique suivant les lois d'assistance d'origine.

Lorsque le couple de correction est non nul, les couples en entrée et en sortie des lois d'assistance sont modifiés, de sorte que le couple volant est augmenté de la valeur du couple de correction.

Comme il va de soi, l'invention ne se limite pas au seul mode de réalisation décrit ci-dessus, à titre d'exemple ; elle en embrasse, au contraire, toutes les variantes de mise en oeuvre de ce procédé. C'est ainsi, notamment, que l'on ne s'éloignerait pas du cadre de l'invention si les informations de vitesse des roues étaient données indirectement par le calculateur d'ABS 16 par l'intermédiaire du calculateur d'un autre système exploitant ces informations, comme le calculateur du système ESP.

**Revendications**

1. Procédé de calcul d'un taux de sous-virage pour véhicules automobiles équipés :

   - d'un système de direction assistée électrique (DAE) comprenant un moteur électrique d'assistance (9) piloté par un calculateur électronique embarqué (11),
   - d'un capteur (12, 14) donnant une première information sur une position angulaire réelle du volant (3),
   - d'un système antiblocage de roues (ABS) fournissant une seconde information sur la vitesse des roues (15) du véhicule,

   **caractérisé en ce que** le calculateur embarqué (11) de la direction assistée électrique traite cette seconde information pour estimer une position angulaire instantanée théorique du volant (3) qu'il compare ensuite à la position angulaire réelle du volant (3) pour en déduire le taux de sous-virage ($\tau$) du véhicule.

2. Procédé selon la revendication 1 dans lequel la première information est donnée par un capteur d'angle dédié (12).

3. Procédé selon la revendication 1 dans lequel la première information est donnée par l'intermédiaire d'un capteur relatif non dédié (14) associé au moteur électrique d'assistance (9).

4. Procédé selon l'une des revendications 1 à 3 dans lequel le taux de sous-virage ($\tau$) déterminé est utilisé par un système de modification du couple (17) ressenti au volant (3).

5. Procédé selon la revendication 4 dans lequel la modification du couple ressenti au volant (3) est proportionnelle au taux de sous-virage ($\tau$) calculé.

6. Procédé selon la revendication 4 ou 5 dans lequel le système de modification du couple (17) ressenti au volant (3) est déconnectable.

7. Procédé selon l'une des revendications 4 à 6 dans lequel la modification du couple ressenti au volant (3) est adaptée au type de virage effectué typiquement à droite ou à gauche.

8. Procédé selon l'une des revendications 4 à 7 dans lequel la modification du couple ressenti au volant (3) est adaptée au type d'écart de trajectoire typiquement sous-virage ou survirage.

9. Procédé selon l'une des revendications 2 à 8 dans lequel le système de modification du couple (17) ressenti au volant (3) agit en diminuant le couple d'assistance du moteur électrique (9).

10. Procédé selon l'une des revendications 2 à 8 dans lequel le système de modification du couple (17) ressenti au volant (3) agit en augmentant le couple d'assistance du moteur électrique (9).

**Claims**

1. A method for determining the understeering ratio of automobiles provided with:

   - electric power steering (EPS) including an electric assistance motor (9) driven by an onboard electronic computer (11),
   - a sensor (12, 14) providing a first piece of information on a real angular position of the steering wheel (3),
   - a wheel anti-lock braking system (ABS) providing a second piece of information on the speed of the wheels (15) of the vehicle,

   **characterized in that** the onboard computer (11) of the electric power steering processes the second piece of information for estimating a theoretical angular position of the steering wheel (3), which is further compared to the real angular position of the steering wheel (3) in order to derive the understeering ratio ($\tau$) of the vehicle.

2. The method according to claim 1, wherein the first piece of information is provided by a dedicated angle sensor (12).

3. The method according to claim 1, wherein the first piece of information is provided via a non-dedicated relative sensor (14) associated with the electric assistance motor (9).

4. The method according to one of claims 1 to 3, wherein the calculated understeering ratio ($\tau$) is used by a system (17) for modifying the torque felt in the steering wheel (3).

5. The method according to claim 4, wherein the modification of the torque felt in the steering wheel (3) is proportional to the calculated understeering ratio ($\tau$).

6. The method according to claim 4 or 5, wherein the system (17) for modifying the torque felt in the steering wheel (3) can be disconnected.

7. The method according to one of claims 4 to 6, wherein the modification of the torque felt in the steering wheel (3) is adapted to the type of steering done, typically to the right or left.

8. The method according to one of claims 4 to 7, wherein the modification of the torque felt in the steering wheel (3) is adapted to the type of trajectory deviation, typically understeering or oversteering.

9. The method according to one of claims 2 to 8, wherein the system (17) for modifying the torque felt in the steering wheel (3) acts by decreasing the assistance torque from the electric assistance motor (9).

10. The method according to one of claims 2 to 8, wherein the system (17) for modifying the torque felt in the steering wheel (3) acts by increasing the assistance torque of the electric motor (9).


**Patentansprüche**

1. Verfahren zur Berechnung eines Untersteuerungsgrads für Kraftfahrzeuge, die ausgestattet sind mit:

    - einem elektrischen Servolenkungssystem (DAE), das einen elektrischen Hilfsmotor (9) umfasst, der von einem elektronischen On-board-Rechner (11) gesteuert wird,
    - einem Sensor (12, 14), der eine erste Information über eine reale Winkelposition des Lenkrads (3) gibt,
    - einem Räder-Antiblockiersystem (ABS), das eine zweite Information über die Geschwindigkeit der Räder (15) des Fahrzeugs liefert,

    **dadurch gekennzeichnet, dass** der On-board-Rechner (11) der elektrischen Servolenkung diese zweite Information verarbeitet, um eine theoretische momentane Winkelposition des Lenkrads (3) abzuschätzen, die er danach mit der tatsächlichen Winkelposition des Lenkrads (3) vergleicht, um daraus den Untersteuerungsgrads (T) des Fahrzeugs abzuleiten.

2. Verfahren nach Anspruch 1, wobei die erste Information von einem speziellen Winkelsensor (12) gegeben wird.

3. Verfahren nach Anspruch 1, wobei die erste Information über einen relativen nicht speziellen Sensor (14) gegeben wird, der dem elektrischen Hilfsmotor (9) zugeordnet ist.

4. Verfahren nach einem der Ansprüche 1 bis 3, wobei der bestimmte Untersteuerungsgrad (T) von einem System zur Änderung des auf das Lenkrad (3) ausgeübten Drehmoments (17) verwendet wird.

5. Verfahren nach Anspruch 4, wobei die Änderung des auf das Lenkrad (3) ausgeübten Drehmoments proportional zum berechneten Untersteuerungsgrad (T) ist.

6. Verfahren nach Anspruch 4 oder 5, wobei das System zur Änderung des auf das Lenkrad (3) ausgeübten Drehmoments (17) abschaltbar ist.

7. Verfahren nach einem der Ansprüche 4 bis 6, wobei die Änderung des auf das Lenkrad (3) ausgeübten Drehmoments an die Art der Untersteuerung angepasst ist, die typischerweise nach rechts oder nach links durchgeführt wird.

8. Verfahren nach einem der Ansprüche 4 bis 7, wobei die Änderung des auf das Lenkrad (3) ausgeübten Drehmoments an die Art der Bahnabweichung angepasst ist, die typischerweise eine Untersteuerung oder Übersteuerung ist.

9. Verfahren nach einem der Ansprüche 2 bis 8, wobei das System zur Änderung des auf das Lenkrad (3) ausgeübten Drehmoments (17) wirkt, indem es das Hilfsdrehmoment des Elektromotors (9) verringert.

10. Verfahren nach einem der Ansprüche 2 bis 8, wobei das System zur Änderung des auf das Lenkrad (3) ausgeübten Drehmoments (17) wirkt, indem es das Hilfsdrehmoment des Elektromotors (9) verstärkt.

**Fig. 1**

**Fig. 2**

**Fig. 3**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 7424352 B2